(19) Europäisches Patentamt / European Patent Office / Office européen des brevets

(11) **EP 2 151 563 A1**

(12) **DEMANDE DE BREVET EUROPEEN**

(43) Date de publication:
**10.02.2010 Bulletin 2010/06**

(51) Int Cl.:
*F02D 41/02* (2006.01)    *F01N 3/08* (2006.01)
*F01N 11/00* (2006.01)

(21) Numéro de dépôt: **09305705.7**

(22) Date de dépôt: **24.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **30.07.2008 FR 0855241**

(71) Demandeur: **Renault S.A.S.**
**92100 Boulogne-Billancourt (FR)**

(72) Inventeurs:
• **Di Penta, Damiano**
**75012, Paris (FR)**
• **Bencherif, Karim**
**92800, Puteaux (FR)**
• **Sorine, Michel**
**78500, Sartrouville (FR)**
• **Zhang, Qinghua**
**78288, Guyancourt (FR)**

(54) **Procédé de gestion du fonctionnement d'un piège a NOx équipant une ligne d'échappement d'un moteur à combustion interne**

(57)    La présente invention concerne un procédé de gestion du fonctionnement d'au moins un piège à NOx (103) équipant une ligne d'échappement (101) d'un moteur à combustion interne (102), ledit piège à NOx (103) étant purgé selon des critères déterminés ; ledit procédé est remarquable en ce qu'il comporte au moins les étapes suivantes de :
- mesure de la quantité de NOx en aval du piège à NOx (103) à partir d'un capteur NOx (104) positionné en aval dudit piège (103),
- mesure de la température dans le piège à NOx (103),
- détermination du débit des gaz d'échappement dans ledit piège (103),
- détermination de la quantité de NOx en amont dudit piège à NOx (103) en fonction de la quantité du NOx en aval du piège (103), de la température et du débit des gaz d'échappement.
    Un autre objet de l'invention concerne un système mettant en oeuvre ledit procédé.

Fig. 5

**Description**

La présente invention concerne un procédé de gestion du fonctionnement d'au moins un piège à NOx équipant une ligne d'échappement d'un moteur à combustion interne et un dispositif pour la mise en oeuvre dudit procédé.

Dans le domaine de l'automobile, il est bien connu d'utiliser des pièges à oxyde d'azote dits pièges à NOx ou «NOx traps », dans une ligne d'échappement d'un moteur diesel ou essence qui génère des particules, des oxydes d'azote afin de piéger lesdits oxydes d'azote et ainsi répondre aux normes en vigueur. Les pièges à NOx sont insérés sur la ligne d'échappement du moteur à combustion et sont adaptés pour piéger les oxydes d'azote.

Des dispositifs de régénération pilotée permettent de brûler périodiquement les oxydes d'azote piégés dans les pièges NOx.

Ces pièges à oxyde d'azote fonctionnent selon deux modes distincts, un mode pauvre et un mode riche au cours duquel le convertisseur est purgé.

En mode pauvre, les oxydes d'azote sont stockés en présence d'un excès d'oxygène et en mode riche, les oxydes d'azotes sont réduits en présence de réducteurs.

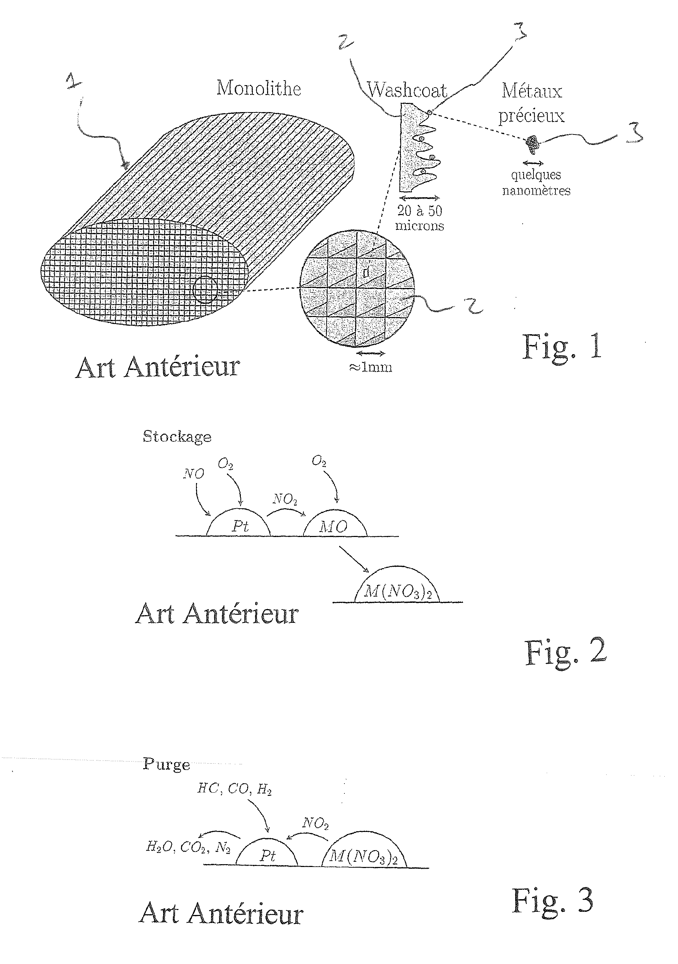

Ces pièges à NOx, en référence à la figure 1, sont usuellement constitués d'un monolithe 1 qui est un support avec un très grand nombre de canaux parallèles, ledit monolithe 1 étant métallique ou en céramique, un « washcoat » 2 recouvrant les canaux parallèles du monolithe 1, ledit washcoat 2 étant un matériau poreux destiné à offrir une très grande surface spécifique permettant de réaliser les réactions catalytiques. Par ailleurs, ledit washcoat 2 comporte des additifs consistant dans différents oxydes métalliques tel que le cérium, le nickel, le baryum, etc. Ces additifs permettent de stabiliser thermiquement le washcoat 2 et favorisent les réactions de stockage d'oxygène et d'oxyde d'azote. De plus, des métaux précieux 3 actifs sont dispersés à la surface du washcoat 2, les sites formés par ces métaux précieux 3 permettant de favoriser les différentes réactions qui sont à la base du fonctionnement du piège NOx. Les métaux précieux 3 les plus couramment utilisés sont le platine (Pt), le palladium (Pd) et le rhodium (Rh).

En référence à la figure 2, en mode pauvre, le stockage des NOx se fait généralement en deux étapes. Dans une première étape, l'oxyde d'azote est oxydé par le platine pour former du dioxyde d'azote ($NO_2$) puis dans une seconde étape le dioxyde d'azote ($NO_2$) est adsorbé sur des sites d'oxydes métalliques (NO).

La purge des oxydes d'azote est réalisée par un passage en mélange riche, en référence à la figure 3, où l'absence d'oxygène favorise la décomposition des nitrates métalliques $M(NO_3)_2$ et l'existence d'espèces réductrices (HC, CO, $H_2$) permet de traiter les NOx désorbés.

Le passage du mélange pauvre en mélange riche peut se faire soit par injection tardive de carburant dans les cylindres, soit par injection de reformat c'est-à-dire par injection de réducteurs directement à l'entrée du piège.

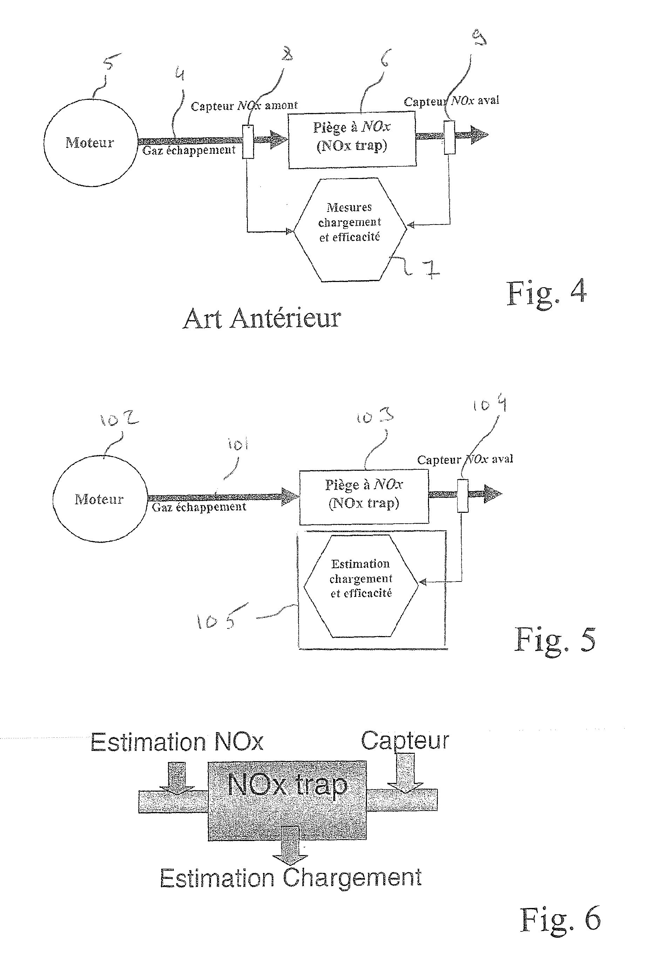

En référence à la figure 4, dans les lignes d'échappement 4 d'un moteur à combustion 5, équipée d'un piège à NOx 6, la gestion des différentes phases de stockage et de purge, c'est-à-dire des différentes phases de mélanges pauvres et de mélanges riches, afin d'obtenir le meilleur compromis entre les émissions et les consommations, est effectuée par une unité de contrôle dite UCE 7 comportant des algorithmes déterminant les changements de phases au moyen de deux capteurs NOx 8 et 9, placés respectivement en amont et en aval du piège NOx 6.

Grâce à ces deux capteurs NOx 8 et 9 placés respectivement en amont et en aval du piège, le chargement et l'efficacité du piège NOx 6 sont directement mesurés afin de déclencher des purges de façon optimale.

On rappellera que le chargement et la somme cumulés dans le temps de la différence des débits de NOx entre l'entrée et la sortie du piège, ce qui peut s'écrire sous la forme suivante :

$$m_{nox}(t) = \int_0^t q_{nox}^{in}(\tau) - q_{nox}^{out}(\tau) \, d\tau$$

$$m_{nox}(t) = \int_0^t q_{ech}(\tau) X_{nox}^{in}(\tau) - q_{ech}(\tau) X_{nox}^{out}(\tau) \, d\tau$$

dans lesquelles $q_{ech}$ est le débit des gaz d'échappements, $X_{nox}^{in}$ est le taux de NOx dans les gaz d'échappement en entrée du piège et $X_{nox}^{out}$ est le taux de NOx dans les gaz d'échappement en sortie dudit piège.

De plus l'efficacité instantanée est le quotient de la différence des débits de NOx, c'est-à-dire le taux de NOx, entre l'entrée et la sortie du piège sur le débit d'entrée ; ce qui peut s'écrire sous la forme de l'équation suivante :

$$\eta_{nox}(t) = \frac{q_{nox}^{in}(\tau) - q_{nox}^{out}(\tau)}{q_{nox}^{in}(\tau)} = \frac{X_{nox}^{in}(\tau) - X_{nox}^{out}(\tau)}{X_{nox}^{in}(\tau)}$$

Ce type de système présente l'inconvénient de nécessiter deux capteurs NOx qui représente un surcoût important dans une architecture de post-traitement.

Afin de limiter les coûts de l'architecture de post-traitement, il a déjà été imaginé de n'utiliser qu'un seul capteur NOx. C'est le cas de la demande de brevet américain US 2006/064968 qui décrit un appareil et un procédé d'estimation de la quantité de NOx adsorbée dans un piège à NOx. Ledit dispositif comporte des moyens aptes à estimer les NOx stockés dans le piège à NOx à partir d'une cartographie de forme polynomiale des émissions de NOx en aval du piège. Lesdites cartographies ou lesdites formes polynomiales utilisent comme entrée le débit des gaz d'échappement, leur température et leur richesse.

Ce type d'appareil et de procédé présentent l'inconvénient de procurer une efficacité insuffisante. En effet, l'utilisation des cartographies ou des formes polynomiales rend l'estimation du chargement du piège approximative. De plus cet appareil et ce procédé n'effectuent qu'une estimation du chargement en négligeant l'efficacité instantanée du piège.

L'un des buts de l'invention est donc de remédier à tous ces inconvénients en proposant une procédé et un système de gestion du fonctionnement d'au moins un piège à NOx équipant une ligne d'échappement de conception simple et peu onéreuse.

A cet effet, et conformément à l'invention, il est proposé un procédé de gestion du fonctionnement d'au moins un piège à NOx équipant une ligne d'échappement d'un moteur à combustion interne, ledit piège à NOx étant purgé selon des critères déterminés ; ledit procédé est remarquable en ce qu'il comporte au moins les étapes suivantes de mesure de la quantité de NOx en aval du piège à NOx à partir d'un capteur NOx positionné en aval dudit piège, de mesure de la température dans le piège à NOx, de détermination du débit des gaz d'échappement dans ledit piège, et de détermination de la quantité de NOx en amont dudit piège à NOx en fonction de la quantité du NOx en aval du piège, de la température et du débit des gaz d'échappement.

Selon une caractéristique essentielle de l'invention, la quantité de NOx en amont est déterminée à partir d'un observateur adaptatif de la forme :

$$\frac{d\hat{X}_{nox}^{in}}{dt} = g(X_{nox}^{out}, q_{ech}, T, \hat{X}_{nox}^{in})$$

dans lequel $\hat{X}_{nox}^{in}$ est l'estimée du taux de NOx dans les gaz d'échappement à l'entrée du piège NOx., $X_{nox}^{out}$ est le taux de NOx dans les gaz d'échappement à la sortie du piège NOx , $q_{ech}$ est le débit des gaz d'échappement et T est la température des gaz d'échappement.

Ledit observateur adaptatif est déterminé à partir d'une méthode d'observation du type Luenberger, Kalman, à filtrage particulaire, à observateurs glissants ou à observateur grand gain.

Par ailleurs, le procédé comporte une étape de détermination du chargement du piège NOx en fonction du taux de NOx mesuré à la sortie du piège NOx, du taux de NOx à l'entrée du piège NOx déterminé en fonction du taux de NOx mesuré à l'entrée du piège NOx, ledit chargement étant égal à la somme cumulée dans le temps de la différence des débits de NOx entre l'entrée et la sortie, le débit de NOx à l'entrée et à la sortie du piège NOx étant égal au débit de gaz d'échappement multiplié par le taux de NOx à l'entrée et respectivement à la sortie du piège à NOx.

Ledit procédé comporte également une étape de détermination de l'efficacité instantanée du piège à NOx en fonction du taux de NOx mesuré à la sortie du piège NOx et du taux de NOx à l'entrée dudit piège NOx déterminé en fonction du taux de NOx mesuré à la sortie du piège NOx, l'efficacité instantanée étant l'équation de la différence du taux de NOx entre l'entrée et la sortie du piège NOx sur le taux de NOx à l'entrée.

Un autre objet de l'invention concerne le système de gestion du fonctionnement d'au moins un piège à NOx qui pend une ligne d'échappement d'un moteur à combustion interne, ledit piège à NOx étant purgé suivant des critères déterminés ; ledit système est remarquable en ce qu'il comporte au moins des moyens de mesure de la quantité de NOx en aval du piège à NOx à partir d'un capteur NOx positionné en aval dudit piège, des moyens de mesure de la température dans le piège à NOx, des moyens de détermination du débit des gaz d'échappement dans ledit piège, et des moyens de détermination de la quantité de NOx en amont dudit piège à NOx en fonction de la quantité de NOx en aval du piège, de la température et du débit des gaz d'échappement.

Lesdits moyens de détermination de la quantité de NOx en amont dudit piège comportent un observateur adaptatif de la forme.

$$\frac{d\hat{X}_{nox}^{in}}{dt} = g(X_{nox}^{out}, q_{ech}, T, \hat{X}_{nox}^{in})$$

Ledit observateur adaptatif consiste en un observateur déterminé à partir d'une méthode d'observation du type Luenberger, Kalman, à filtrage particulaire, à observateurs glissants, ou à observateur grand gain.

Par ailleurs, le système suivant l'invention comporte des moyens de détermination du chargement du piège NOx en fonction du taux de NOx mesuré à la sortie du piège NOx, du taux de NOx à l'entrée du piège NOx estimé, ledit chargement étant égal à la somme cumulée dans le temps de la différence de débit de NOx entre l'entrée et la sortie, le débit de NOx à l'entrée et à la sortie du piège NOx étant égal au débit de gaz d'échappement multiplié par le taux de NOx à l'entrée et respectivement à la sortie du piège à NOx.

De plus, le système comporte des moyens de détermination de l'efficacité instantané du piège à NOx en fonction du taux de NOx mesuré à la sortie du piège NOx et du taux de NOx à l'entrée dudit piège NOx déterminé en fonction du taux de NOx mesuré à la sortie du piège NOx, l'efficacité instantanée étant le quotient de la différence du taux de NOx entre l'entrée et la sortie du piège NOx sur le taux de NOx à l'entrée.

D'autres avantages et caractéristiques ressortiront mieux de la description qui va suivre de plusieurs variantes d'exécution, données à titre d'exemple non limitatif, du procédé et du système de gestion du fonctionnement d'au moins un piège à NOx conforme à l'invention, à partir des dessins annexés sur lesquels :

- la figure 1 est une représentation schématique du monolithe d'un piège à NOx de l'art antérieur,
- la figure 2 est une représentation schématique du phénomène de stockage de NOx dans le piège,
- la figure 3 est une représentation schématique du phénomène chimique de déstockage des NOx dans le piège de l'art antérieur,
- la figure 4 est une représentation schématique d'une ligne d'échappement d'un moteur à combustion interne comportant un système de gestion du fonctionnement du piège à NOx utilisant deux capteurs NOx placés respectivement en amont et en aval dudit piège,
- la figure 5 est une représentation schématique d'une ligne d'échappement d'un moteur à combustion interne comportant un système de gestion du fonctionnement d'un piège à NOx n'utilisant qu'un seul capteur NOx placé en aval dudit piège, conformément à l'invention,
- la figure 6 est une représentation schématique de l'étape d'estimation du chargement du NOx trap conformément au procédé suivant l'invention sur un cycle NEDC,
- la figure 7 est une représentation graphique de la quantité de NOx stockés au cours du temps dans le piège à NOx en comparant la quantité de NOx mesurés avec la quantité de NOx obtenus suivant l'estimation conformément à l'invention,
- la figure 8 est une représentation graphique comparant le taux de NOx dans les gaz d'échappement en entrée du piège en comparant ledit taux mesuré avec ledit taux estimé suivant le procédé conforme à l'invention,
- la figure 9 est une représentation graphique de la quantité de NOx entrés cumulés au cours du temps en comparant la valeur mesurée avec la valeur estimée suivant le procédé conforme à l'invention,
- la figure 10 est une représentation schématique de la gestion du déclenchement des purges d'un piège à NOx et qui prend une ligne d'échappement d'un moteur à combustion interne conformément à l'invention,
- la figure 11 est une représentation schématique d'un système de surveillance de panne du moteur dont la ligne d'échappement est équipée d'un piège à NOx et d'un système de gestion conforme à l'invention,
- la figure 12 est une représentation schématique du synoptique des différentes étapes d'un procédé de surveillance de panne du moteur dont la ligne d'échappement est équipée d'un piège à NOx et du système de gestion conforme à l'invention.

En référence à la figure 5, une ligne d'échappement 101 d'un moteur à combustion interne 102 est équipée d'un piège à NOx 103 et d'un capteur NOx 104 positionné en aval dudit piège à NOx 103. Les mesures de la quantité de NOx délivrée par le capteur NOx 104 sont transmises à une unité de contrôle dite UCE 105 qui comporte des moyens d'estimation du chargement et de l'efficacité dudit piège à NOx 103.

Lesdits moyens d'estimation consistent en un modèle de piège à NOx 103 réduit basé sur les phénomènes physico-chimiques du piège. Ce modèle donne dynamiquement le taux de NOx aval, c'est-à-dire le taux de NOx en sortie du piège NOx 103, en fonction du taux de NOx amont, du débit des gaz d'échappement et de la température de ces gaz T. Ce modèle peut donc s'écrire sous la forme suivante :

$$\frac{dX_{nox}^{out}}{dt} = f(X_{nox}^{in}, q_{ech}, T, X_{nox}^{out})$$

On observera que ce modèle pourra être un modèle de chargement, de déchargement, ou un modèle combiné.

Par exemple, ledit modèle peut s'écrire de la façon suivante :

$$\begin{cases} \dfrac{dC_{NOx}^{stock}}{dt} = v\left(C_{NOx}^{in} - C_{NOx}^{out}\right) \\ C_{NOx}^{out} = \dfrac{\left(1 + k_{inib}\right)\left(C_{NOx}^{in} + k_2\left(C_{NOx}^{stock}\right)^2 / v\right)}{1 + k_{inib} + k_1\left(NSC - C_{NOx}^{stock}\right)^2 / v} \end{cases}$$

avec les lois cinétiques données par l'équations suivantes :

$$k_i = k_i^0 e\left(-\frac{E_i}{RT}\right)$$

dans laquelle la constante NSC représente la capacité maximale de stockage des NOx dans ledit piège à NOx 103.

Lesdits moyens comportent, par ailleurs, un observateur adaptatif permettant à partir du modèle décrit précédemment d'estimer le taux de NOx à l'entrée du piège 103. Cet observateur adaptatif peut alors s'écrire sous la forme suivante :

$$\frac{d\hat{X}_{nox}^{in}}{dt} = g\left(X_{nox}^{out}, q_{ech}, T, \hat{X}_{nox}^{in}\right)$$

On observera que l'on pourra utiliser les méthodes d'observation suivantes pour l'observateur adaptatif :

- la méthode d'obervation de LUENDERGER décrite notamment dans « D.G. LUENDERGER, Observing the state of a linear system. IEEE Transaction on Military Electronics, (8) : 74-80,1964.
- La méthode d'observation de Kalman (non invariant, étendu, « unscented ») décrite dans « R.E. Kalman and R. Bucy, New results in linear filtering and prediction. Journal of Basic Engineering (ASME), 83D :98-108,1961.
- La méthode d'observation du filtrage particulaire décrite dans R.E. Kalman « Contributions to the theory of optimal control », Bol. Soc. Mat. Mexicana, 5 :102-119, 1960 et « On a new approach to filtering and prediction problems ». ASME J. Basic Engineering, 28, 1960.

- Les méthodes d'observation des observateurs glissants décrits dans « A. Gelb, Applied Optimal Estimation. The MIT press, Massachussetts Institute of Technology, 1974 ».
- La méthode d'observation d'un observateur grand gain décrit notamment dans « J.P. Gauthier Determistic observation theory and applications. Cambridge University Press, 2001, isbn 0521805937 ».

Ainsi, en disposant des mesures du débit des gaz d'échappement $q_{ech}$ et du taux de NOx dans les gaz d'échappement en sortie du piège $X_{nox}^{out}$, le système suivant l'invention estime le taux de NOx dans les gaz d'échappement en entrée du piège à NOx 103 à partir du modèle décrit précédemment puis lesdits moyens estiment le chargement du piège NOx 103, qui est la somme cumulée dans le temps de la différence des débits de NOx entre l'entrée et la sortie du piège 103, à partir des équations suivantes :

$$m_{nox}(t) = \int_0^t q_{nox}^{in}(\tau) - q_{nox}^{out}(\tau) d\tau$$

$$m_{nox}(t) = \int_0^t q_{ech}(\tau) X_{nox}^{in}(\tau) - q_{ech}(\tau) X_{nox}^{out}(\tau) d\tau$$

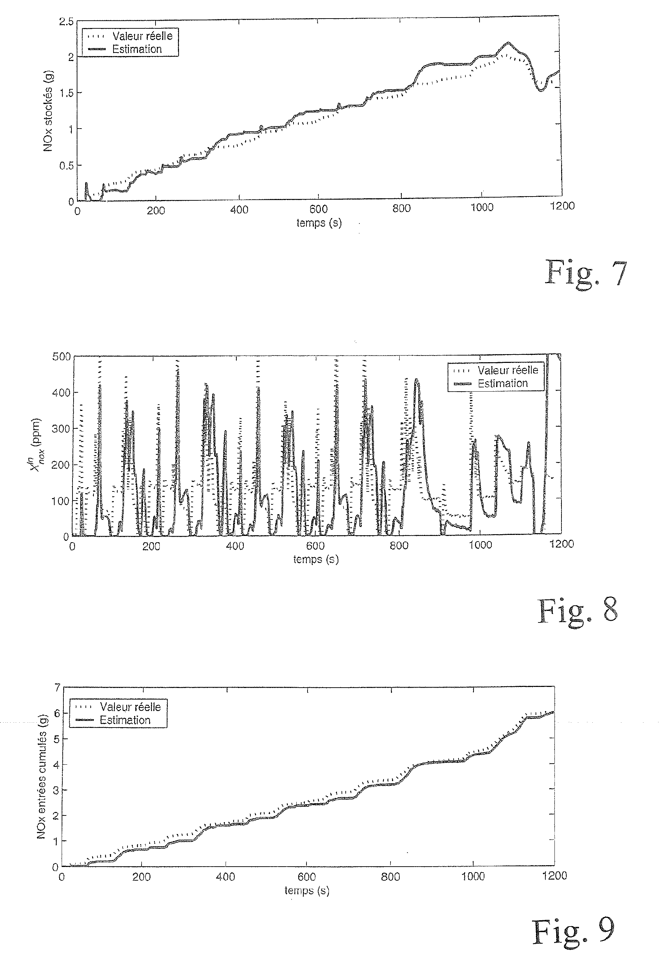

On observera, en référence, aux figures 7 à 9 que l'estimation obtenue à partir du système conforme à l'invention, sur un cycle NEDC, selon l'acronyme anglo-saxon « New European Driving Cycle », est particulièrement proche des valeurs réelles dans le piège à NOx.

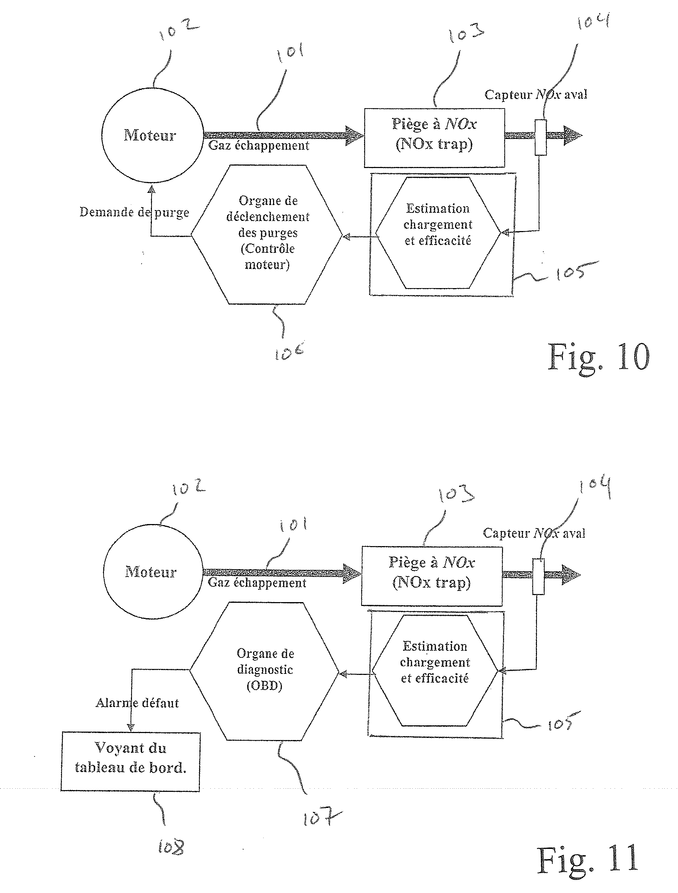

En référence à la figure 10, le système suivant l'invention est particulièrement adapté à la gestion des déclenchements des purges du piège à NOx 103. Le système, de la même manière que précédemment, estime le chargement du piège à NOx 103 à partir de la mesure de la quantité de NOx transmise par le capteur NOx aval 104. Le système estime alors l'efficacité instantanée du piège NOx 103, l'efficacité étant égale au quotient de la différence des débits de NOx, c'est-à-dire le taux de NOx entre l'entrée et la sortie du piège sur le débit d'entrée, à partir de l'équation suivante :

$$\eta_{nox}(t) = \frac{q_{nox}^{in}(\tau) - q_{nox}^{out}(\tau)}{q_{nox}^{in}(\tau)} = \frac{X_{nox}^{in}(\tau) - X_{nox}^{out}(\tau)}{X_{nox}^{in}(\tau)}$$

Les estimations du chargement et l'efficacité du piège à NOx sont alors transmises à un organe de déclenchement des purges 106 qui transmet alors une demande de purge au moteur 102.

Accessoirement, le système suivant l'invention pourra avantageusement être utilisé pour surveiller les éventuelles pannes du moteur.

En effet, en cas de panne du moteur, ce dernier se met à produire un niveau de NOx trop important par rapport à la normale.

Dans cet exemple particulier de réalisations, en référence à la figure 11, les moyens d'estimation du chargement et de l'efficacité du piège à NOx 103 de l'unité de contrôle UCE 105 transmettent les estimations en chargement et en efficacité à un organe de diagnostic dit OBD 107 qui détecte une émission de NOx trop importante par rapport à la normale et qui déclenche, si le niveau de NOx est supérieur ou égal à un seuil, un voyant du tableau de bord 108.

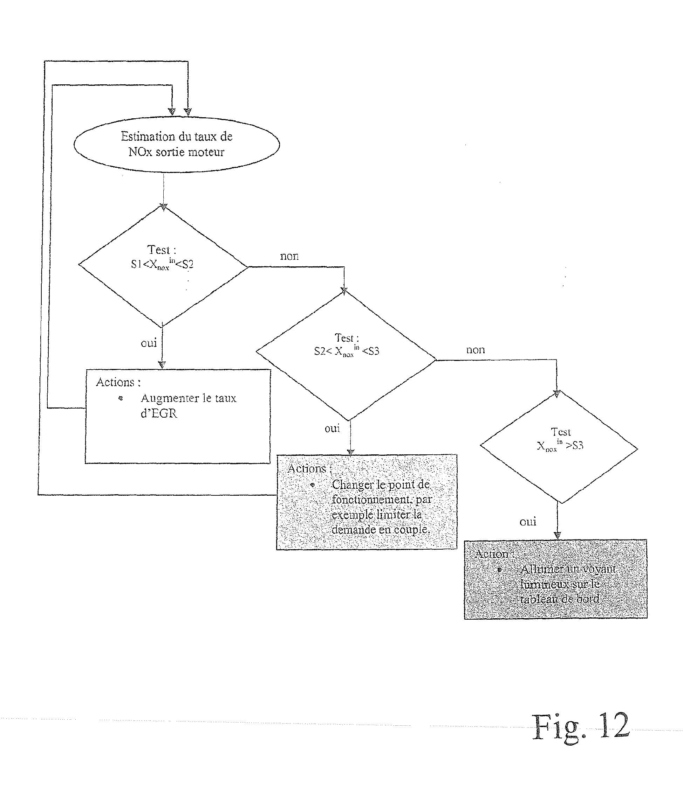

L'algorithme, par exemple, consiste en référence à la figure 12 à comparer l'estimation du taux de NOx à la sortie du moteur avec trois seuils S1, S2 et S3. Si le taux de NOx à la sortie du moteur $X_{nox}^{in}$ est compris entre le premier seuil S1 et le second seuil S2, une commande d'augmentation du taux d'EGR est transmise. Si le taux de NOx à la sortie du moteur $X^{in}_{nox}$ est compris entre le second seuil S2 et le troisième seuil S3 alors une instruction de changement du point de fonctionnement est transmise. Ce changement du point de fonctionnement peut consister par exemple dans la limitation de la demande en couple du moteur. Enfin si le taux de NOx à la sortie du moteur $X^{in}_{nox}$ est supérieur au troisième seuil S3, une instruction d'allumage d'un voyant lumineux sur le tableau de bord est transmise indiquant une panne moteur.

Enfin il va de soi que les exemples que l'on vient de donner ne sont que des illustrations particulières en aucun cas limitatifs quant au domaine d'application de l'invention.

## Revendications

1.  Procédé de gestion du fonctionnement d'au moins un piège à NOx (103) équipant une ligne d'échappement (101) d'un moteur à combustion interne (102), ledit piège à NOx (103) étant purgé selon des critères déterminés, **caractérisé en ce qu'**il comporte au moins les étapes suivantes de :

    - mesure de la quantité de NOx en aval du piège à NOx (103) à partir d'un capteur NOx (104) positionné en aval dudit piège (103),
    - mesure de la température dans le piège à NOx (103),
    - détermination du débit des gaz d'échappement dans ledit piège (103),
    - détermination de la quantité de NOx en amont dudit piège à NOx (103) en fonction de la quantité du NOx en aval du piège (103), de la température et du débit des gaz d'échappement.

2.  Procédé suivant la revendication 1 **caractérisé en ce que** la quantité de NOx est déterminée à partir d'un observateur adaptatif de la forme :

$$\frac{d\hat{X}^{in}_{nox}}{dt} = g(X^{out}_{nox}, q_{ech}, T, \hat{X}^{in}_{nox})$$

    dans lequel $X^{in}_{nox}$ est le taux de NOx dans les gaz d'échappement à l'entrée du piège NOx (103), $X^{out}_{nox}$ est le taux de NOx dans les gaz d'échappement à la sortie du piège NOx (103), $q_{ech}$ est le débit des gaz d'échappement et $T$ est la température des gaz d'échappement.

3.  Procédé suivant la revendication 2 **caractérisé en ce que** l'observateur adaptatif est déterminé à partir d'une méthode d'observation du type Luenberger, Kalman, à filtrage particulaire, à observateurs glissants ou observateur grand gain.

4.  Procédé suivant l'une quelconque des revendications 1 à 3 **caractérisé en ce qu'**il comporte une étape de détermination du chargement du piège NOx (103) en fonction du taux de NOx mesuré à la sortie du piège NOx (103), du taux de NOx à l'entrée du piège NOx (103) déterminé en fonction du taux de NOx mesuré à l'entrée du piège NOx (103), ledit chargement étant égal à la somme cumulée dans le temps de la différence des débits de NOx entre l'entrée et la sortie, le débit de NOx à l'entrée et à la sortie du piège NOx (103) étant égal au débit de gaz d'échappement multiplié par le taux de NOx à l'entrée et respectivement à la sortie du piège à NOx (103).

5.  Procédé suivant l'une quelconque des revendications 1 à 4 **caractérisé en ce qu'**il comporte une étape de détermination de l'efficacité instantanée du piège à NOx (103) en fonction du taux de NOx mesuré à la sortie du piège NOx (103) et du taux de NOx à l'entrée dudit piège NOx (103) déterminé en fonction du taux de NOx mesuré à la sortie du piège NOx (103), l'efficacité instantanée étant le quotient de la différence du taux de NOx entre l'entrée et la sortie du piège NOx (103) sur le taux de NOx à l'entrée.

6.  Système de gestion du fonctionnement d'au moins un piège à NOx (103) équipant une ligne d'échappement (101) d'un moteur à combustion interne (102), ledit piège à NOx (103) étant purgé suivant des critères déterminés, **caractérisé en ce qu'**il comporte au moins des moyens de mesure (104) de la quantité de NOx en aval du piège à NOx (103) à partir d'un capteur NOx (104) positionné en aval dudit piège, des moyens de mesure de la température dans le piège à NOx (103), des moyens de détermination du débit des gaz d'échappement dans ledit piège (103), et des moyens de détermination de la quantité de NOx en amont dudit piège à NOx (103) en fonction de la quantité de NOx en aval du piège (103), de la température et du débit des gaz d'échappement.

**7.** Système suivant la revendication 6 **caractérisé en ce que** les moyens de détermination de la quantité de NOx en amont dudit piège (103) comportent un observateur adaptatif de la forme.

$$\frac{d\hat{X}^{in}_{nox}}{dt} = g(X^{out}_{nox}, q_{ech}, T, \hat{X}^{in}_{nox})$$

**8.** Système suivant la revendication 7 **caractérisé en ce que** l'observateur adaptatif consiste en un observateur déterminé à partir d'une méthode d'observation du type Luenberger, Kalman, à filtrage particulaire, à observateurs glissants, ou à observateur grand gain.

**9.** Système suivant l'une quelconque des revendications 6 à 8 **caractérisé en ce qu'**il comporte des moyens de détermination du chargement du piège NOx (103) en fonction du taux de NOx mesuré à la sortie du piège NOx (103), du taux de NOx à l'entrée du piège NOx (103) estimé, ledit chargement étant égal à la somme cumulée dans le temps de la différence de débit de NOx entre l'entrée et la sortie, le débit de NOx à l'entrée et à la sortie du piège NOx (103) étant égal au débit de gaz d'échappement multiplié par le taux de NOx à l'entrée et respectivement à la sortie du piège à NOx (103).

**10.** Système suivant l'une quelconque des revendications 6 à 9 **caractérisé en ce qu'**il comporte des moyens de détermination de l'efficacité instantané du piège à NOx (103) en fonction du taux de NOx mesuré à la sortie du piège NOx (103) et du taux de NOx à l'entrée dudit piège NOx (103) déterminé en fonction du taux de NOx mesuré à la sortie du piège NOx (103), l'efficacité instantanée étant le quotient de la différence du taux de NOx entre l'entrée et la sortie du piège NOx (103) sur le taux de NOx à l'entrée.

**11.** Application du système de gestion du fonctionnement d'un piège à NOx (103) suivant l'une quelconque des revendications 6 à 10 à un dispositif de gestion du déclenchement des purges dudit piège NOx (103).

**12.** Application du système de gestion du fonctionnement d'au moins un piège à NOx suivant l'une quelconque des revendications 6 à 10 à un dispositif de surveillance de panne d'un moteur dont la ligne d'échappement est équipée dudit piège à NOx (103).

Monolithe  Washcoat  Métaux précieux

quelques nanomètres

20 à 50 microns

≈1mm

Art Antérieur

Fig. 1

Stockage

$NO$  $O_2$  $O_2$

$NO_2$

$Pt$  $MO$

$M(NO_3)_2$

Art Antérieur

Fig. 2

Purge

$HC, CO, H_2$

$NO_2$

$H_2O, CO_2, N_2$  $Pt$  $M(NO_3)_2$

Art Antérieur

Fig. 3

Fig. 4

Art Antérieur

Fig. 5

Fig. 6

Fig. 7

Fig. 8

Fig. 9

102
101
103
104

Capteur *NOx* aval

Moteur

Gaz échappement

Piège à *NOx*
(NOx trap)

Demande de purge

Organe de
déclenchement
des purges
(Contrôle
moteur)

Estimation
chargement
et efficacité

105

106

Fig. 10

102
101
103
104

Capteur *NOx* aval

Moteur

Gaz échappement

Piège à *NOx*
(NOx trap)

Organe de
diagnostic
(OBD)

Estimation
chargement
et efficacité

105

Alarme défaut

Voyant du
tableau de bord.

108

107

Fig. 11

Estimation du taux de
NOx sortie moteur

Test :
$S1 < X_{nox}^{in} < S2$

non

oui

Actions :
- Augmenter le taux
  d'EGR

Test :
$S2 < X_{nox}^{in} < S3$

non

oui

Test
$X_{nox}^{in} > S3$

Actions :
- Changer le point de
  fonctionnement, par
  exemple limiter la
  demande en couple.

oui

Action :
- Allumer un voyant
  lumineux sur le
  tableau de bord

Fig. 12

# EP 2 151 563 A1

Europäisches
Patentamt

European
Patent Office

Office européen
des brevets

## RAPPORT DE RECHERCHE EUROPEENNE

Numéro de la demande

EP 09 30 5705

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 1 640 576 A (MITSUBISHI FUSO TRUCK & BUS [JP]) 29 mars 2006 (2006-03-29) <br> * figures 1,4 * <br> * alinéas [0001] - [0011], [0019] * <br> * alinéas [0025], [0026] * <br> * alinéas [0032] - [0043] * <br> ----- | 1-12 | INV. <br> F02D41/02 <br> F01N3/08 <br> F01N11/00 |
| A | US 2001/032457 A1 (LUDWIG WOLFGANG [DE] ET AL) 25 octobre 2001 (2001-10-25) <br> * figure 1 * <br> * alinéas [0006] - [0019] * <br> ----- | 1-12 | |
| A | FR 2 854 201 A (BOSCH GMBH ROBERT [DE]) 29 octobre 2004 (2004-10-29) <br> * page 2, ligne 20 - page 3, ligne 4 * <br> * page 5, ligne 18-28 * <br> ----- | 1,4,6,9, 11-12 | |
| A | EP 1 134 388 A (FORD GLOBAL TECH INC [US]) 19 septembre 2001 (2001-09-19) <br> * alinéa [0008] * <br> ----- | 1,5-6, 10-12 | |

DOMAINES TECHNIQUES RECHERCHES (IPC)

F02D
F01N

Le présent rapport a été établi pour toutes les revendications

| Lieu de la recherche | Date d'achèvement de la recherche | Examinateur |
|---|---|---|
| La Haye | 22 octobre 2009 | Parmentier, Hélène |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 30 5705

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2009

| Document brevet cité au rapport de recherche | | Date de publication | Membre(s) de la famille de brevet(s) | | Date de publication |
|---|---|---|---|---|---|
| EP 1640576 | A | 29-03-2006 | CN | 1752421 A | 29-03-2006 |
| | | | DE | 602005005407 T2 | 26-06-2008 |
| | | | JP | 2006090238 A | 06-04-2006 |
| | | | KR | 20060050945 A | 19-05-2006 |
| | | | PT | 1640576 E | 04-04-2008 |
| | | | US | 2006064968 A1 | 30-03-2006 |
| US 2001032457 | A1 | 25-10-2001 | WO | 0028201 A1 | 18-05-2000 |
| | | | EP | 1131549 A1 | 12-09-2001 |
| | | | JP | 3531867 B2 | 31-05-2004 |
| | | | JP | 2002529652 T | 10-09-2002 |
| FR 2854201 | A | 29-10-2004 | DE | 10318116 A1 | 11-11-2004 |
| EP 1134388 | A | 19-09-2001 | US | 6629453 B1 | 07-10-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20060064968 A

**Littérature non-brevet citée dans la description**

• **D.G. LUENDERGER.** Observing the state of a linear system. *IEEE Transaction on Military Electronics,* 1964, 74-80
• **R.E. Kalman ; R. Bucy.** New results in linear filtering and prediction. *Journal of Basic Engineering (ASME),* 1961, vol. 83D, 98-108
• **R.E. Kalman.** Contributions to the theory of optimal control. *Bol. Soc. Mat. Mexicana,* 1960, vol. 5, 102-119

• On a new approach to filtering and prediction problems. *ASME J. Basic Engineering,* 1960, 28
• **A. Gelb.** Applied Optimal Estimation. The MIT press, 1974
• **J.P. Gauthier.** Determistic observation theory and applications. Cambridge University Press, 2001